# EUROPEAN PATENT SPECIFICATION

(11) **EP 0 767 332 B1**
(45) Date of publication and mention of the grant of the patent: **02.08.2000**
(21) Application number: 96114366.6
(22) Date of filing: 09.09.1996
(51) Int. Cl.: F16K 31/68, G05D 23/02, G05D 23/13

(54) **Anti-limescale thermostatic mixer**
Nicht verkalkender Thermostatmischer
Mitigeur thermostatique non-entartrant

(30) Priority: 21.09.1995 IT MI951960
(43) Date of publication of application: 09.04.1997
(73) Proprietor: MACRIFIN S.p.A., 20121 Milano (IT)
(72) Inventor: Caleffi, Francesco, 28024 Gozzano (NO) (IT)
(74) Representative: Coloberti, Luigi

(56) References cited:
- WO-A-90/06465
- DE-A- 2 613 965
- DE-A- 4 031 207
- DE-A- 4 038 714

## Description

The present invention relates to a thermostatic mixer for sanitary water according to pre-characterising part of claim 1, normally used for mixing a flow of hot water coming from a central source, such as for example a water-heater or a boiler, with a flow of cold water coming from a water distribution network, supplying the mixed hot water to a single pipe which conveys it via a distribution network to several users or delivery points.

A thermostatic mixer of the above mentioned kind generally comprises a thermostatic control device, of the retroactive type, which keeps the temperature of mixed hot water at a preset constant value, independently of variations in temperature of the incoming hot and/or cold water, or variations in the pressure, also completely closing the incoming flow of hot water in the case where there is an interruption in the cold water from the water supply network.

Such a mixer generally comprises a hollow body having a longitudinal mixing chamber into which a cold water inlet and a hot water inlet open, respectively, in axially spaced positions, and inside which a closing member is axially movable towards annular sealing seats provided in the mixing chamber, between a retracted position where it closes one of the water inlets and an advanced position where it closes the other one of the said inlets, there being also provided a linear thermostatic actuator, supported by the said closing member, which reacts against a biasing spring, so as to move the closing member between the sealing seats, keeping the temperature of flow of the mixed hot water at a substantially constant value. Such a mixing device is described for example in WO-A- 90/06465, in which use of plastic material for internal fittings is also suggested to prevent corrosion.

Mixers of this kind are advantageously used in plants for distributing, to various user points, sanitary hot water pre-mixed at a desired temperature, avoiding heat dispersion in the distribution network with consequent saving in energy, since they prevent the delivery or wastage of hot water at a high temperature; moreover they operate safely both when no cold water is fed and no balanced conditions for the pressure exist at the cold and hot water inlets, thus subjecting the said distribution plants to less wear.

Correct operation of a thermostatic mixer of the above mentioned kind is therefore linked to the movement of a closing member which is thermostatically controlled and which must be able to freely move, with a minimum of friction, ensuring at all times a sealing action and an efficient operation of the mixer in accordance with current regulations.

From tests and experiments carried out, as well as on the basis of the experience acquired by the same applicant through analyses of thermostatic mixers currently in use, it has been established that the formation of limescale is the most frequent cause of inefficient operation, since calcification forming over time tend to prevent sliding of the closing member as well as causing deterioration of the seals.

The general object of the present invention is therefore to provide a thermostatic mixer of the aforementioned kind, designed to overcome or substantially reduce the drawbacks of the prior known mixers.

In particular, one object of the present invention is to provide a thermostatic mixer which has anti-limescale properties such as to avoid the formation of calcifications on the sealing surfaces in the region of the hot and cold water inlets, as well as on the closing member itself, ensuring efficient performance of the mixer over time.

A further object of the present invention is to provide a thermostatic mixer, as mentioned above, by means of which it is possible to eliminate the formation of calcifications in order to reduce to a minimum the sliding friction of the thermostatic actuator, preventing blocking of the same.

Yet another object of the present invention is to provide a thermostatic mixer by means of which it is possible to improve the mixing degree of the hot and cold water, avoiding the formation of preferential flows inside the mixing chamber.

These and other objects can be achieved with a thermostatic mixer according to claim 1.

The general principles and a preferred embodiment of a thermostatic mixer according to the invention, will be described hereinbelow with reference to the accompanying drawings, in which:
- Figure 1 is a longitudinal sectional view through the mixer according to the invention;
- Figure 2 is a cross-sectional view along the line 2-2 of Figure 1;
- Figure 3 shows a partially sectioned view of a guide cage for the closing member of the mixer according to Figure 1;
- Figure 4 shows a partially sectioned view of the closing member for the mixer according to Figure 1.

As shown, the thermostatic mixer comprises a body 10 made of metal, normally brass, provided with a mixing chamber 11 longitudinally extending along the axis of the mixer and which terminates at one of its ends with an outlet 12 for the mixed water.

An inlet 13, for example for cold water, and an inlet 14, for example for hot water, open in axially spaced positions of the mixing chamber 11 in the vicinity of the other end.

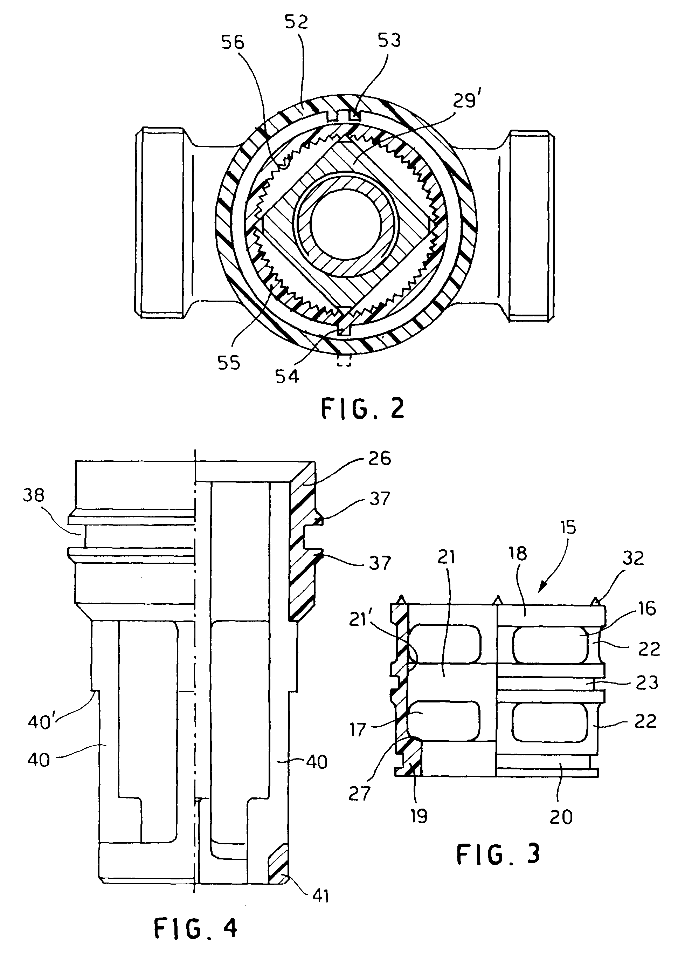

A guide cage 15 for a closing member 26 is provided inside the body 10 of the mixer, in the region of the water inlets 13 and 14; the cage 15 is made of anti-limescale plastic material, and is provided with large openings 16, 17 on the sides through which the cold water and the hot water flow from the inlets 13 and 14 towards the mixing chamber 11. The cage 15 serves as a guide and for providing sealing seats for the internal closing member 26 which is shown in detail in the view of Figure 3. As can be seen from this Figure, the guide cage 15 substantially consists of a tubular open body of plastic material having a first set of side apertures 16 circumferentially arranged and axially spaced from corresponding set of apertures 17, on the peripheral wall to communicate the inside of the cage 15 with the water inlet 13 and the inlet 14, respectively.

More precisely, the cage 15 comprises three axially spaced annular members 18, 19, 21 that is a top ring 18, a bottom ring 19, and an intermediate ring 21 joined by thin longitudinal struts 22 which together define the side apertures 16 and 17 through which the water flows. Both the bottom ring 19 and the intermediate ring 21 have an outer groove 20 and 23, respectively, for housing a corresponding annular gasket 24 and 25 for ensuring a sealing with respect to the body 10 of the mixer.

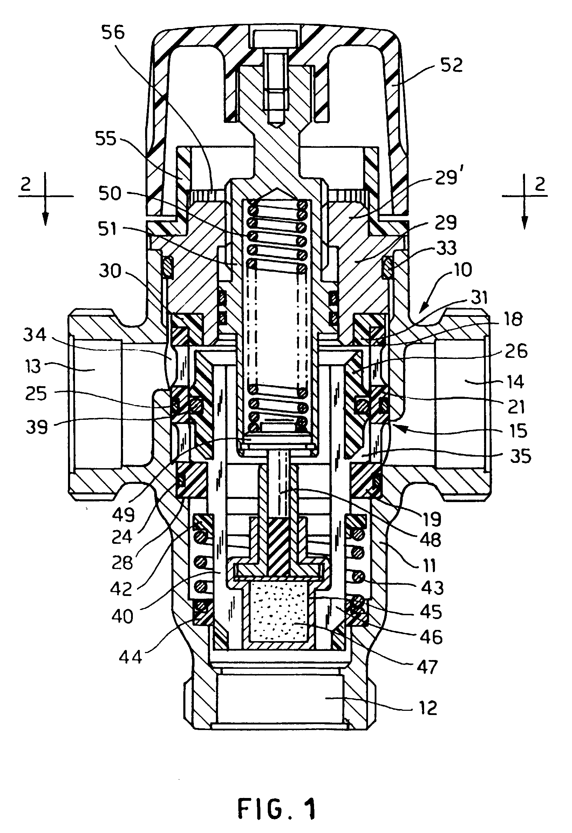

The top and intermediate rings 18, 21 have moreover a cylindrical internal surface 21' which extend flush to internal surfaces of the struts 22 so as to form a guide and a sealing means for the closing member 26 (Figure 1) movable inside said cage.

As can be seen from Figures 1 and 3, the inner surface of bottom ring 19 protrudes inwardly the guide cage 15 with respect to the inner surface 21' so as to form an annular shoulder 27 providing a sealing seat against which the closing member 26 may be urged to close the inlet 14 for the water to the mixing chamber 11.

The cage 15 is locked inside the body 10, against an annular abutment 28, by a screwable stopper 29, normally referred to as a "screw plug", as well as by means of an additional ring 30 of plastic material provided with a shoulder 31 intended to form a second sealing seat at the opposite end of the cage 15, against which the closing member 26 may be urged so as to close the inlet 13 for the water to the mixing chamber 11 and to the mixed-water outlet 12 of the mixer.

More precisely, as shown in Figure 3, the locking of the cage 15 inside the body 10 is achieved by four small triangular projections 32 at the upper edge of the top ring 18 which, during the assembly, are deformed by the pressure exerted by the additional ring 30 following screwing of the stopper 29 into the body 10 of the mixer. An annular seal 33 provides the necessary external sealing action between the stopper 29 and the body 10 of the mixer.

As mentioned above, inside the cage 15 there slides a closing member 26 which may be moved between the limits permitted by the two sealing seats 27 and 31. The features of the closing member 26 and an associated part thereof are shown in Figure 1 and in the detail of Figure 4.

As shown in the cross-sectional view of Figure 1, the bottom ring 19 of the cage 15 has an outer diameter which is smaller than that of the other two rings 18 and 21; correspondingly the connecting struts 22 have a limited thickness and are radially set back with respect to the external surface of the cage defined by the rings 18 and 21, so as to form inside the body 10 of the mixer two annular chambers 34 and 35 which favour the distribution and the circulation of the hot water and cold water inside the cage to improve the mixing.

As more clearly shown in Figure 4, the closing member 26 is in the form of a cylindrical sleeve made of plastic material or any other suitable anti-limescale material, and is provided on the outer surface with two circular ribs 37 axially spaced and defining the seat 38 for an annular sealing gasket 39; the ribs 37 have moreover a cylindrical peripheral surface for sliding against the internal cylindrical surface 21' of the intermediate ring 21 and struts 22 of the guide cage 15.

The closing member 26 extends downwards, inside the mixing chamber 11, with four longitudinal legs 40 joined at the bottom by a ring 41, to define a basket-like extension.

The radial thickness of the legs reduces in an intermediate position so as to form outer shoulders 40' to retain a stop ring 42 against which the upper end of a biasing spring 43 rests. The bottom end of the spring 43 in turn rests against a stop ring 44 located in an annular seat of the mixing chamber 11; the bottom stop ring 44 also serves as additional guide means for the closing member 26.

As shown in Figure 1 a linear thermostatic actuator, of the wax type, which may expand and contract depending on the temperature of the mixed water, is arranged inside the basket-like element formed by the four legs 40 and the connecting ring 41.

More particularly, the thermostatic actuator comprises a bulb 45 seated on the internal shoulders 46 of the legs 40 of the basket, thus coming into direct contact with the flow of mixed water. The bulb 45 has inside a quantity of wax 47 which, when changing the temperature of the mixed water, increases or decreases in volume, causing a longitudinal sliding, i.e. a forward or a backward movement of a stem 48 which is downwardly urged by a piston 49 biased an extra-stroke spring 50 located inside the hollow shank of an adjusting screw 51; the screw 51, which can be operated by a knob 52, passes through and screws into the upper stopper 29 for closing the body 10 of the mixer, penetrating through the closing member 26.

The extra-stroke spring 50 constantly pushes the piston 49 forwards with a force which is greater, for example twice that of the opposite spring 43.

Therefore, the bottom surface of the extra-stroke piston 49 forms the reference point for the self-regulation of the temperature of the mixed water.

When, on account of an increase in temperature, the thermostatic element expands until it interferes with the extra-stroke piston 49, the closing member 26, as a result of a counter-action of the system, is pushed downwards and starts its function of regulating the mixing of cold and hot water. On the other side, the opposite spring 43 pushes the closing member 26 with the thermostatic element 44 upwards, against the extra-stroke piston 49.

As mentioned above, in order to regulate and improve the operation of the thermostatic mixer according to the present invention, it is possible to use for the cage 15, the closing member 26 and the associated parts, as well as for the ring 30 which defines the upper sealing seat, a suitable plastic anti-limescale material or any other suitable material having similar anti-adherence characteristics so as to prevent the calcification of limescale in water. In order to achieve better results, it is preferable to use the same anti-limescale material for all the parts, so as to obtain a thermal expansion which is constant and at the same time limited, thus reducing the risks of blocking of the closing member when hot water flows through.

As mentioned above, the temperature regulating system comprises the hollow screw 51 operated by the knob 52 and containing the piston 49 and the extra-stroke spring 50; by means of these elements it is possible to regulate the space existing at the beginning between the end of the stem 48 and the extra-stroke piston 49.

As referred to previously, in order to regulate the temperature of the mixed water, it is required to operate the knob 52 which is able to perform one rotation only of 360°, by projections 53 which interfere with a radial projection 54 provided on a plastic ring-nut 55 forced onto the closing stopper 29. The ring-nut 55 must be positioned so that reference projection 54 will always be in a front position with respect to the body 10 of the mixer. In this connection, the grooved internal outline 56 of the reference ring-nut 55, which is of the "multiple-spline" type, mates with the teeth of a square portion 29' provided at the top end of the closing stopper 29. The use of a square portion, instead of a hexagon one, allows mating with a greater number of teeth of the grooved profile 56 of the ring-nut, allowing finer adjustment since the edges of the square form an angle of 90° instead of the normal 120° angles of a hexagon.

Operation of the thermostatic mixer according to the present invention is as follows:

### Normal operation

When there is no water flowing through the mixer, the temperature of the bulb 45 of the thermostatic control element falls below the ambient temperature, so that the thermostatic element contracts and the spring 43 pushes the closing member 26 upwards inside the guide cage 15, against the ring 30 of the upper sealing seat, until it closes off the cold water inlet 13.

If a user facility is opened, at this point a flow is established which initially consists only of hot water at the maximum temperature, since the closing member is in the highest position, opening completely the inlet 14 towards the mixing chamber 11. The bulb 44 is therefore flushed by the hot water and starts to cause elongation of the thermostatic actuator. At a certain point the stem 48 of the thermostatic element interferes with the piston 49 inside the adjusting screw 51 on the basis of the adjusting position assigned to the screw itself.

Once contact has occurred and elongation of the thermostatic actuator continues, the movement of the stem 48 causes, by reaction, the downwards movement of the closing member 26 which starts to open the passage for the cold water from the inlet 13 and at the same time to partially close the passage for the hot water from the inlet 14. The two streams of hot and cold water distributed by the annular chambers 34 and 35 are therefore mixed homogeneously along the mixing chamber 11; the bulb 25 of the thermostatic element is now flushed by a mixture of water at a lower temperature so that it starts to contract until it reaches an equilibrium condition for the closing member 26, which can be modified only by operating again screw 51 by the knob.

### Variation of the inlet temperature

Let us assume that an equilibrium condition exists and that suddenly there is an increase in the temperature of the hot water, or a drop in the temperature of the cold water. In both cases the temperature of the mixed water will change so that the thermostatic element, heating up or cooling, will move the closing member 26 again until it reaches a new equilibrium condition.

### Variation of pressure at the inlet

Starting from an equilibrium condition, with the pressure of the hot water equal to the pressure of the cold water, let us assume that the pressure, for example, of the cold water increases considerably. Consequently the throughput of cold water will increase, causing lowering of the temperature of the mixed water.

The thermostatic element will intervene again, contracting so as to allow the spring 43 to push the closing member upwards, consequently increasing the loss of head in the cold water flow and reducing that in the hot water flow until a new equilibrium condition is achieved.

### Sudden interruption in the cold water supply

In this case the thermostatic element is enveloped by a flow of hot water only and consequently extends rapidly until the closing member 26, pushed downwards, closes entirely the hot water inlet, performing a function normally referred to as an "anti-scalding safety function".

From that stated and illustrated in the accompanying drawings it is therefore obvious that, as a result of the use of a guide cage for the closing member, it is possible to provide sealing seats made of anti-limescale material, in particular plastic material, so as to improve sliding of the said closing member, reducing the risk of blockage thereof. Owing to the use of an intermediate cage, it also possible to improve the mixing conditions, resulting in the uniform distribution of hot and cold water along annular chambers, as mentioned above. Finally, the use of a special grooved profile for the reference ring-nut of the adjusting screw, allows greater positioning precision of the reference element itself and, consequently, better control of the temperature of the mixed water.

It is understood, however, that the above description and illustrations with reference to the accompanying drawings have been provided purely by way of example since other modifications or variants are possible within the scope of the claimed invention.

## Claims

1. Thermostatic mixer device for supplying hot, cold and mixed water to several delivery points, of the type comprising:
- a hollow body (10) having hot water and cold water inlets (13, 14) opening into a longitudinally extending mixing chamber (11) at axially spaced apart positions (34, 35);
- a closing member (26) in plastic material sliding in said mixing chamber (11) between a retracted position, against a first sealing seat (27) where it closes one (14) of said water inlets (13, 14), and an advanced position against a second sealing seat (31), where it closes the other one (13) of said water inlets (13, 14) in respect to an outlet (12) for the mixed water;
- an intermediate sealing seat (21) for the closing member (26) arranged between the cold and the hot water inlets (13, 14);
- a linear thermostatic actuator (45, 48) downwardly extending from the closing member (26) inside the mixing chamber (11) to move the closing member (26) between said first and second sealing seats (27,31), biasing means (43) being provided to push said closing member (26) against one of the sealing seats (27,31); and
- a cylindrical guide cage (15) in plastic material for the closing member (26) tightly fitted inside the mixing chamber (11),
characterised in that
- said guide cage (15) comprises first and second annular members (18,19) providing said sealing seats (27,31) at both ends of the cage (15); a third annular member (21) to provide said intermediate sealing seat for the closing member (26), between said first and second sealing seats (27, 31); and water flow apertures (16, 17) on the peripheral wall of the guide cage (15) facing the hot and cold water inlets (13,14);
- and in that the closing member (26) comprises a basket-like element (40,41) for supporting the thermostatic actuator (45, 48), said basket-like element (40,41) longitudinally extending into the mixing chamber (11) towards said output (12), and guide means (19, 44) for guiding the basket-like element (40,41) inside the mixing chamber (11), the closing member (26) and the guide cage (15) being formed by limescale anti-adherence material to prevent calcifications inside the mixer device.

2. Thermostatic mixer according to Claim 1, characterised in that each of said water inlets (13,14) opens into the mixing chamber (11) via an annular water-distribution chamber (34,35) peripherally arranged around said guide cage (15).

3. Thermostatic mixer according to Claim 1, characterized in that said guide cage (15) is locked inside the body (10) of the mixer by an additional sealing ring (30) and a screwable stopper (29) having a passing through hole for the threaded stem (51) of a temperature-control device, and in that said guide cage (15), on the side facing said additional sealing ring (30), is provided with deformable locking projections (32).

4. Thermostatic mixer according to Claim 3, in which said screwable stem (51) of the temperature-control device is connected to an operating knob (52) characterized in that said knob (52) comprises inwardly extending projections (53) defining a stop means for a corresponding projection (54), of a bushing member (55) angularly adjustable on the screwable stopper (29) of the mixer body (10).

5. Thermostatic mixer according to Claim 4, characterized in that said bushing member (55) comprises a longitudinal toothing (56) which engages with a corresponding toothed portion (29') of the screwable stopper (29).

6. Thermostatic mixer according to Claim 5, characterized in that the teeth (56) of the bushing member (55) and the corresponding teeth on the screwable stopper (29) have side flanks forming an angle of 90°.

## Patentansprüche

1. Thermostatische Mischervorrichtung zum Liefern heißen, halten und gemischten Wassers an mehrere Abgabepunkte, des Typs, der umfaßt:
- einen Hohlkörper (10) mit einem Heißwasser- und einem Kaltwassereinlaß (13, 14), die in eine in Längsrichtung sich erstreckende Mischkammer (11) an axial beabstandeten Positionen (34, 35) münden;
- ein Verschlußelement (26) aus Kunststoff, das in der Mischkammer (11) zwischen einer hinteren Position an einem ersten Dichtungssitz (27), in der es einen (14) der Wassereinlässe (13, 14) verschließt, und einer vorderen Position an einem zweiten Dichtungssitz (31), in der es den anderen (13) der Wassereinlässe (13, 14) gegenüber einem Auslaß (12) für das gemischte Wasser verschließt, gleitet;
- einen Zwischendichtungssitz (21) für das Verschlußelement (26), der zwischen dem Kaltwasser- und dem Heißwassereinlaß (13, 14) angeordnet ist;
- einen linearen thermostatischen Aktuator (45, 48), der sich vom Verschlußelement (26) in der Mischkammer (11) nach unten erstreckt, um das Verschlußelement (26) zwischen dem ersten und dem zweiten Dichtungssitz (27, 31) zu bewegen, wobei eine Vorbelastungseinrichtung (43) vorgesehen ist, um das Verschlußelement (26) gegen einen der Dichtungssitze (27, 31) zu schieben; und
- einen zylindrischen Führungskäfig (15) aus Kunststoff für das Verschlußelement (26), der in die Mischkammer (11) eng eingesetzt ist,
dadurch gekennzeichnet, daß
- der Führungskäfig (15) ein erstes und ein zweites ringförmiges Element (18, 19), die die Dichtungssitze (27, 31) an beiden Enden des Käfigs (15) schaffen; ein drittes ringförmiges Element (21), das den Zwischendichtungssitz für das Verschlußelement (26) zwischen dem ersten und dem zweiten Dichtungssitz (27, 31) schafft; und Wasserströmungsöffnungen (16, 17) in der Umfangswand des Führungskäfigs (15), die den Heißwasser- und Kaltwassereinlässen (13, 14) zugewandt sind, umfaßt;
- und daß das Verschlußelement (26) ein korbähnliches Element (40, 41) für die Unterstützung des thermostatischen Aktuators (45, 48), das sich in Längsrichtung in die Mischkammer (11) zum Auslaß (12) erstreckt, sowie eine Führungseinrichtung (19, 44) zum Führen des korbähnlichen Elements (40, 41) in der Mischkammer (11) umfaßt, wobei das Verschlußelement (26) und der Führungskäfig (15) durch ein Kalkbelag-Antihaftmaterial gebildet sind, um Kalkablagerungen in der Mischervorrichtung zu verhindern.

2. Thermostatischer Mischer nach Anspruch 1, dadurch gekennzeichnet, daß jeder der Wassereinlässe (13, 14) in die Mischkammer (11) über eine ringförmige Wasserverteilungskammer (34, 35), die am Umfang um den Führungskäfig (15) angeordnet ist, mündet.

3. Thermostatischer Mischer nach Anspruch 1, dadurch gekennzeichnet, daß der Führungskäfig (15) im Körper (10) des Mischers durch einen zusätzlichen Dichtungsring (30) und einen verschraubbaren Anschlag (29), der ein Durchgangsloch für den Gewindeschaft (51) einer Temperatursteuervorrichtung besitzt, verriegelt ist und daß der Führungskäfig (15) auf der dem zusätzlichen Dichtungsring (30) zugewandten Seite mit verformbaren Verriegelungsvorsprüngen (32) versehen ist.

4. Thermostatischer Mischer nach Anspruch 3, in dem der verschraubbare Schaft (51) der Temperatursteuervorrichtung mit einem Betätigungsknopf (52) verbunden ist, dadurch gekennzeichnet, daß der Knopf (52) einwärts sich erstreckende Vorsprünge (53) aufweist, die eine Anschlageinrichtung für einen entsprechenden Vorsprung (54) eines Buchsenelements (55), das am verschraubbaren Anschlag (29) des Mischerkörpers (10) in Winkelrichtung einstellbar ist, definieren.

5. Thermostatischer Mischer nach Anspruch 4, dadurch gekennzeichnet, daß das Buchsenelement (55) eine longitudinale Zahnung (56) aufweist, die mit einem entsprechenden gezahnten Abschnitt (29) des verschraubbaren Anschlags (29) in Eingriff ist.

6. Thermostatischer Mischer nach Anspruch 5, dadurch gekennzeichnet, daß die Zähne (56) des Buchsenelements (55) und die entsprechenden Zähne am verschraubbaren Anschlag (29) Seitenflanken besitzen, die einen Winkel von 90° bilden.

## Revendications

1. Dispositif de mélangeur thermostatique pour délivrer de l'eau chaude, froide et mélangée à différents points de délivrance, du type comprenant :
- un corps creux (10) comprenant des entrées d'eau chaude et d'eau froide (13, 14) s'ouvrant dans une chambre de mélange s'étendant longitudinalement (11) en des positions axialement espacées l'une de l'autre (34, 35) ;
- un élément de fermeture (26) en matière plastique coulissant dans ladite chambre de mélange (11) entre une position rétractée, contre un premier siège de scellement étanche (27) où il ferme l'une (14) desdites entrées d'eau (13, 14), et une position avancée contre un deuxième siège de scellement étanche (31), où il ferme l'autre (13) desdites entrées d'eau (13, 14) par rapport à une sortie (12) pour l'eau mélangée ;
- un siège de scellement étanche intermédiaire (21) pour l'élément de fermeture (26), agencé entre les entrées d'eau froide et chaude (13, 14) ;
- un dispositif d'actionnement thermostatique linéaire (45, 48) s'étendant vers le bas à partir de l'élément de fermeture (26) à l'intérieur de la chambre de mélange (11) pour déplacer l'élément de fermeture (26) entre lesdits premier et deuxième sièges de scellement étanche (27, 31), des moyens de sollicitation (43) étant présents pour pousser ledit élément de fermeture (26) contre l'un des sièges de scellement étanche (27, 31) ; et
- une cage de guidage cylindrique (15) en matière plastique pour l'élément de fermeture (26), étroitement adaptée à l'intérieur de la chambre de mélange (11),
caractérisé en ce que :
- ladite cage de guidage (15) comprend des premier et deuxième éléments annulaires (18, 19) constituant lesdits sièges de scellement étanche (27, 31) aux deux extrémités de la cage (15) ; un troisième élément annulaire (21) de façon à constituer ledit siège de scellement étanche intermédiaire pour l'élément de fermeture (26), entre lesdits premier et deuxième sièges de scellement étanche (27, 31) ; et des ouvertures d'écoulement d'eau (16, 17) sur la paroi périphérique de la cage de guidage (15) regardant vers les entrées d'eau chaude et froide (13, 14) ;
- et en ce que l'élément de fermeture (26) comprend un élément analogue à un panier (40, 41) pour supporter le dispositif d'actionnement thermostatique (45, 48), ledit élément analogue à un panier (40, 41) s'étendant longitudinalement à l'intérieur de la chambre de mélange (11) en direction de ladite sortie (12), et des moyens de guidage (19, 44) pour guider l'élément analogue à un panier (40, 41) à l'intérieur de la chambre de mélange (11), l'élément de fermeture (26) et la cage de guidage (15) étant formés par un matériau anti-adhérent vis-à-vis des dépôts de tartre pour éviter des calcifications à l'intérieur du dispositif de mélangeur.

2. Mélangeur thermostatique selon la revendication 1, caractérisé en ce que chacune desdites entrées d'eau (13, 14) s'ouvre dans la chambre de mélange (11) par l'intermédiaire d'une chambre de distribution d'eau annulaire (34, 35) agencée de façon périphérique autour de ladite cage de guidage (15).

3. Mélangeur thermostatique selon la revendication 1, caractérisé en ce que ladite cage de guidage (15) est bloquée à l'intérieur du corps (10) du mélangeur par une bague de scellement étanche additionnelle (30) et une butée vissable (29) comportant un trou traversant de passage pour la tige filetée (51) d'un dispositif de commande de la température, et en ce que ladite cage de guidage (15), sur le côté regardant vers ladite bague de scellement étanche additionnelle (30), comporte des saillies de blocage déformables (32).

4. Mélangeur thermostatique selon la revendication 3, dans lequel ladite tige vissable (51) du dispositif de commande de la température est raccordée à une molette d'actionnement (52), caractérisé en ce que ladite molette (52) comprend des saillies s'étendant vers l'intérieur (53) définissant des moyens de butée pour une saillie correspondante (54), un élément de coussinet (55) pouvant être ajusté de façon angulaire sur la butée vissable (29) du corps de mélangeur (10).

5. Mélangeur thermostatique selon la revendication 4, caractérisé en ce que ledit élément de coussinet (55) comprend une denture longitudinale (56) qui vient en prise avec une partie dentée correspondante (29') de la butée vissable (29).

6. Mélangeur thermostatique selon la revendication 5, caractérisé en ce que les dents (56) de l'élément de coussinet (55) et les dents correspondantes sur la butée vissable (29) comportent des flancs latéraux formant un angle de 90°.
